# EUROPEAN PATENT APPLICATION

(11) **EP 4 471 935 A1**
(43) Date of publication of application: **04.12.2024**
(21) Application number: 23746870.7
(22) Date of filing: 20.01.2023
(51) Int. Cl.: H01M 10/54, C01B 25/14, H01B 13/00, H01M 4/62, H01M 10/0562

(54) **METHOD FOR PRODUCING SULFIDE-BASED SOLID ELECTROLYTE**

(30) Priority: 28.01.2022 JP 2022012075
(71) Applicant: AGC INC., Chiyoda-ku, Tokyo 1008405 (JP)
(72) Inventor: HIGASHI, Seiji, Tokyo 100-8405 (JP); FUJII, Naoki, Tokyo 100-8405 (JP); SEKI, Hidenobu, Tokyo 100-8405 (JP); ANDO, Ryota, Tokyo 100-8405 (JP)
(74) Representative: Müller-Boré & Partner Patentanwälte PartG mbB
(86) International application number: PCT/JP2023/001785
(87) International publication number: WO 2023/145658

(57) **Abstract**

The present invention pertains to a method for producing a sulfide-based solid electrolyte, the method comprising obtaining a sulfide-based solid electrolyte recycled product (B) from a liquid in which a sulfide-based solid electrolyte (A) in a sulfide-based solid electrolyte-containing mixture is dissolved in an organic solvent. The mixture contains the sulfide-based solid electrolyte (A) and other substances insoluble in the organic solvent. The method comprises: obtaining a solid-liquid mixture by immersing the mixture in the organic solvent to dissolve the sulfide-based solid electrolyte (A) while having the other substances remaining as solid components in the organic solvent; obtaining a dried sulfide-based solid electrolyte recycled product (B) by subjecting the solid-liquid mixture to solid-liquid separation, causing a sulfide-based solid electrolyte to be deposited out from an obtained liquid fraction, and vaporizing the organic solvent; and subjecting the recycled product (B) to a thermal treatment at 340°C or higher.

## Description

### TECHNICAL FIELD

The present invention relates to a method for producing a sulfide-based solid electrolyte.

### BACKGROUND ART

Lithium-ion secondary batteries are widely used for a portable electronic device such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of an inorganic solid electrolyte used in the all-solid-state lithium-ion secondary battery include a sulfide-based solid electrolyte. Among the inorganic solid electrolytes, the sulfide-based solid electrolyte has an advantage of being excellent in lithium ion conductivity.

In such an all-solid-state lithium-ion secondary battery, there is a demand for the reuse of a material from a waste solid battery. For example, Patent Literature 1 discloses a method for efficiently recovering a positive electrode active material from a positive electrode of a sulfide solid battery while preventing generation of hydrogen sulfide, and also enabling repeated use of a treatment liquid.

### CITATION LIST

### PATENT LITERATURE

Patent Literature 1:JP2016-58280A

### SUMMARY OF INVENTION

### TECHNICAL PROBLEM

In Patent Literature 1, the positive electrode active material is recovered from the positive electrode and the treatment liquid is repeatedly reused, but no attention is paid to the reuse of the solid electrolyte.

An object of the present invention is to provide a method for producing a sulfide-based solid electrolyte that can reuse a sulfide-based solid electrolyte contained in a waste solid battery or the like and can produce a sulfide-based solid electrolyte having excellent lithium ion conductivity.

### SOLUTION TO PROBLEM

As a result of intensive studies, the present inventors have found that, in the case where a waste solid battery or the like is used as a raw material, a sulfide-based solid electrolyte and another substance can be efficiently separated by a method including obtaining a sulfide-based solid electrolyte recycled product from a liquid in which a sulfide-based solid electrolyte contained in the waste solid battery is dissolved in an organic solvent. Further, the present inventors have found that by subjecting the recycled product to a heat treatment at a predetermined temperature or higher, the obtained sulfide-based solid electrolyte can be made to have excellent lithium ion conductivity, thereby completing the present invention.

That is, the present invention relates to the following 1 to 9.
1. A method for producing a sulfide-based solid electrolyte including obtaining a sulfide-based solid electrolyte recycled product (B) from a liquid in which a sulfide-based solid electrolyte (A) in a sulfide-based solid electrolyte-containing mixture is dissolved in an organic solvent,
   in which the sulfide-based solid electrolyte-containing mixture contains the sulfide-based solid electrolyte (A) and another substance insoluble in the organic solvent, and
   the method includes: obtaining a solid-liquid mixture by immersing the sulfide-based solid electrolyte-containing mixture in the organic solvent to dissolve the sulfide-based solid electrolyte (A) in the organic solvent while having the other substance remaining as a solid component in the organic solvent; obtaining the dried sulfide-based solid electrolyte recycled product (B) by subjecting the solid-liquid mixture to solid-liquid separation, causing a sulfide-based solid electrolyte to be deposited out from an obtained liquid fraction, and vaporizing the organic solvent; and subjecting the recycled product (B) to a heat treatment at 340°C or higher.
2. The method for producing a sulfide-based solid electrolyte according to the 1, in which in the heat treatment, the recycled product (B) is heat-treated at 600°C or higher.
3. The method for producing a sulfide-based solid electrolyte according to the 1 or 2, further including adding one or more selected from the group consisting of a sulfur source, a phosphorus source, a halogen source, and a lithium source.
4. The method for producing a sulfide-based solid electrolyte according to the 1 or 2, in which the heat treatment is performed in a gas atmosphere containing a sulfur element.
5. The method for producing a sulfide-based solid electrolyte according to the 1 or 2, in which the organic solvent includes one or more selected from the group consisting of methanol, ethanol, isopropyl alcohol, dipropylene glycol, ethyl acetate, chloroform, acetone, carbon disulfide, acetonitrile, dimethylformamide, 1,4-dioxane, N-methylformamide, tetrahydrofuran, and ethylenediamine.
6. The method for producing a sulfide-based solid electrolyte according to the 1 or 2, in which the sulfide-based solid electrolyte-containing mixture contains a substance extracted from an all-solid-state battery.
7. The method for producing a sulfide-based solid electrolyte according to the 1 or 2, in which the sulfide-based solid electrolyte-containing mixture contains a substance obtained by pulverizing an all-solid-state battery.
8. The method for producing a sulfide-based solid electrolyte according to the 1 or 2, including performing an operation of extracting an organic component from the sulfide-based solid electrolyte-containing mixture using an aprotic solvent before the immersion.
9. The method for producing a sulfide-based solid electrolyte according to the 1 or 2, in which the obtained sulfide-based solid electrolyte has an oxygen content of 1 mass% or more, or a carbon content of 0.01 mass% or more.

### ADVANTAGEOUS EFFECTS OF INVENTION

According to a method for producing a sulfide-based solid electrolyte of the present invention, a sulfide-based solid electrolyte contained in a waste solid battery or the like can be reused, and a sulfide-based solid electrolyte having excellent lithium ion conductivity can be produced.

### BRIEF DESCRIPTION OF DRAWINGS

FIG. 1 is a diagram showing a result of XRD measurement in Example 1.
FIG. 2 is a diagram showing a result of measuring lithium ion conductivity in Example 1.
FIG. 3 is a flowchart illustrating a production method according to an embodiment of the present invention.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

A method for producing a sulfide-based solid electrolyte according to the present embodiment (hereinafter also referred to as the present production method) is a method for producing a sulfide-based solid electrolyte, including obtaining a sulfide-based solid electrolyte recycled product (B) from a liquid in which a sulfide-based solid electrolyte (A) in a sulfide-based solid electrolyte-containing mixture is dissolved in an organic solvent. The sulfide-based solid electrolyte-containing mixture contains the sulfide-based solid electrolyte (A) and another substance insoluble in the organic solvent. The method includes obtaining a solid-liquid mixture by immersing the sulfide-based solid electrolyte-containing mixture in the organic solvent to dissolve the sulfide-based solid electrolyte (A) in the organic solvent while having the other substance remaining as a solid component in the organic solvent; obtaining the dried sulfide-based solid electrolyte recycled product (B) by subjecting the solid-liquid mixture to solid-liquid separation, causing a sulfide-based solid electrolyte to be deposited out from an obtained liquid fraction, and vaporizing the organic solvent; and subjecting the recycled product (B) to a heat treatment at 340°C or higher. In the present specification, a sulfide-based solid electrolyte obtained by heat-treating the sulfide-based solid electrolyte recycled product (B) may be referred to as a sulfide-based solid electrolyte (C).

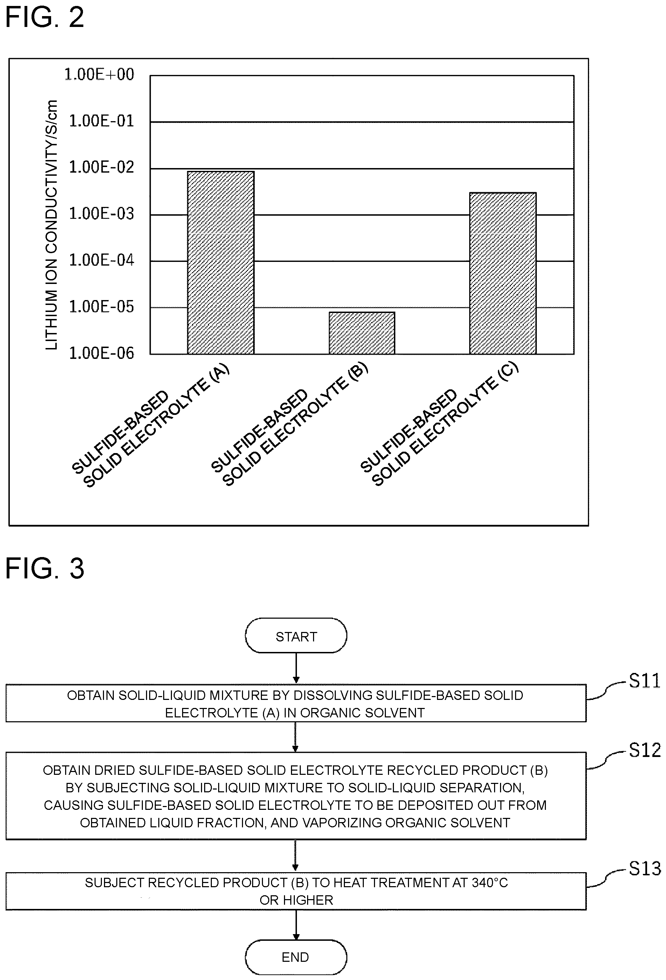

FIG. 3 is a flowchart illustrating the production method according to the embodiment of the present invention. The production method includes, for example, a step S11 of obtaining a solid-liquid mixture by dissolving a sulfide-based solid electrolyte (A) in an organic solvent, a step S12 of obtaining a dried sulfide-based solid electrolyte recycled product (B) by subjecting the solid-liquid mixture to solid-liquid separation, causing the sulfide-based solid electrolyte to be deposited out from an obtained liquid fraction, and vaporizing the organic solvent, and a step S13 of subjecting the recycled product (B) to a heat treatment at 340°C or higher.

### (Sulfide-based Solid Electrolyte)

In the present production method, a type and composition of the produced sulfide-based solid electrolyte (C) are not particularly limited, and can be appropriately selected depending on application, desired physical properties, and the like. Further, the sulfide-based solid electrolyte (A) and the sulfide-based solid electrolyte recycled product (B) may also be various depending on the type, the composition, and the like of the sulfide-based solid electrolyte (C). Examples of such a sulfide-based solid electrolyte include a sulfide-based solid electrolyte containing Li, P, and S, and a sulfide-based solid electrolyte containing Li, P, S, and Ha. Here, Ha represents at least one element selected from halogen elements. Specifically, Ha is, for example, at least one element selected from the group consisting of F, Cl, Br, and I. In order to obtain an argyrodite crystal structure, Ha more preferably includes at least one of Cl and Br, still more preferably includes Cl, and yet still more preferably elemental Cl or a mixture of Cl and Br.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase.

The sulfide-based solid electrolyte preferably includes a crystal structure from the viewpoint of improving lithium ion conductivity. In the case where the sulfide-based solid electrolyte contains a crystal structure, a crystal contained in the sulfide-based solid electrolyte is preferably an ion-conductive crystal. Specifically, the ion-conductive crystal is a crystal having lithium ion conductivity of preferably more than 10⁻⁴ S/cm, and more preferably more than 10⁻³ S/cm.

More specifically, examples of the sulfide-based solid electrolyte include a sulfide-based solid electrolyte containing an LGPS crystal such as Li₁₀GeP₂S₁₂, a sulfide-based solid electrolyte containing an argyrodite crystal such as Li₆PS₅Cl₁, Li-P-S-Ha-based crystallized glass, and LPS crystallized glass such as Li₇P₃S₁₁. The sulfide-based solid electrolyte may be a combination of these, or may contain a plurality of types of crystals having different compositions or crystal structures. From the viewpoint of excellent lithium ion conductivity, a sulfide-based solid electrolyte containing an argyrodite crystal is preferable as the sulfide-based solid electrolyte.

When the sulfide-based solid electrolyte contains crystals, the crystal structure thereof preferably contains an argyrodite type from the viewpoint of symmetry of the crystal structure. Highly symmetric crystals tend to allow lithium-ion conduction paths to extend in three dimensions, which is favorable when a powder is formed.

In order to obtain the argyrodite crystal structure, the crystal phase includes Ha in addition to Li, P, and S. Ha more preferably includes at least one of Cl and Br, still more preferably includes Cl, and is even more preferably elemental Cl or a mixture of Cl and Br.

The argyrodite crystal can be defined as including Li, P, S, and Ha, and having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably has a peak at a position of 2θ = 25.7 ± 0.5°.

A composition of the sulfide-based solid electrolyte is determined by composition analysis using ICP emission spectrometry, atomic absorption, ion chromatography, or the like. A type of the crystal included in the sulfide-based solid electrolyte can be analyzed from an X-ray powder diffraction (XRD) pattern.

### (Sulfide-based Solid Electrolyte-containing Mixture)

The present production method includes obtaining the sulfide-based solid electrolyte recycled product (B) from a liquid in which the sulfide-based solid electrolyte (A) in the sulfide-based solid electrolyte-containing mixture is dissolved in the organic solvent. The sulfide-based solid electrolyte-containing mixture contains the sulfide-based solid electrolyte (A) and another substance insoluble in the organic solvent.

A preferred example of the sulfide-based solid electrolyte-containing mixture is a waste solid battery containing a sulfide-based solid electrolyte. For example, the sulfide-based solid electrolyte-containing mixture preferably contains a substance extracted from an all-solid-state battery. Further, from the viewpoint of ease of preparation, the sulfide-based solid electrolyte-containing mixture more preferably contains a substance obtained by pulverizing the all-solid-state battery. The present production method is a method including dissolving the sulfide-based solid electrolyte (A) in the sulfide-based solid electrolyte-containing mixture in the organic solvent. Further, substances other than the sulfide-based solid electrolyte contained in the all-solid-state battery generally tend to be insoluble in the organic solvent that dissolves the sulfide-based solid electrolyte. Therefore, according to the present production method, even in the case where a material derived from the waste solid battery is used as the sulfide-based solid electrolyte-containing mixture without prior separation of the sulfide-based solid electrolyte and another substance, the sulfide-based solid electrolyte and another substance are efficiently separated to obtain the sulfide-based solid electrolyte recycled product (B).

The sulfide-based solid electrolyte-containing mixture that can be used in the present production method is not limited thereto, and may be, for example, a sulfide-based solid electrolyte mixed with impurities, or a sulfide-based solid electrolyte mixed with ceramics, or a resin such as polytetrafluoroethylene (PTFE) or polyethylene.

As described above, the sulfide-based solid electrolyte (A) is, for example, a sulfide-based solid electrolyte contained in a waste solid battery, and may be one that constitutes a solid electrolyte layer, or may be one contained in a positive electrode layer, a negative electrode layer, or the like. Further, a specific type and a composition of the sulfide-based solid electrolyte (A) are not particularly limited as described above. The sulfide-based solid electrolyte (A) may be a deteriorated sulfide-based solid electrolyte having the type and composition shown above.

The sulfide-based solid electrolyte-containing mixture contains the sulfide-based solid electrolyte (A) and another substance. Another substance is a substance insoluble in the organic solvent in which the sulfide-based solid electrolyte-containing mixture is immersed. Here, the term "insoluble in an organic solvent" means that solubility at room temperature is, for example, 1 mg or less per 1 L of solvent. That is, another substance may be slightly dissolved in the organic solvent as long as the effect of the present invention is not adversely affected.

For example, when the sulfide-based solid electrolyte-containing mixture contains the substance extracted from the all-solid-state battery, examples of another substance include various substances and components other than the sulfide-based solid electrolyte that constitutes the all-solid-state battery, and are a positive electrode active material, a negative electrode active material, a positive electrode current collector, a negative electrode current collector, a conductive aid, a binder, and a battery exterior body.

The various substances and components described above may all be known, and specific examples of the positive electrode active material include lithium cobalt oxide (LiCoO₂), lithium nickel oxide (LiNiO₂), lithium manganese oxide (LiMnO₂), lithium nickel manganese oxide, a composite metal oxide represented by Li(NiₓCo_{y}Mn_{z}Mₐ)O₂ (x + y + z + a = 1, 0 ≤ x ≤ 1, 0 ≤ y ≤ 1, 0 ≤ z ≤ 1, 0 ≤ a ≤ 1, M is at least one selected from Al, Mg, Nb, Ti, Cu, Zn, and Cr), and a polyanionic olivine type positive electrode represented by LiₐM_{b}(PO₄)_{c} (1 ≤ a ≤ 4, 1 ≤ b ≤ 2, 1 ≤ c ≤ 3, and M is at least one selected from Fe, V, Co, Mn, Ni, and VO).

Examples of the positive electrode current collector include aluminum and an alloy thereof, and a thin metal plate (metal foil) of stainless steel or the like.

Examples of the negative electrode current collector include a thin metal plate (metal foil) of copper or aluminum or the like.

Examples of the negative electrode active material include carbon-based materials such as graphite, hard carbon, and soft carbon, aluminum, silicon, metals capable of forming an alloy with lithium such as tin, amorphous oxides such as silicon oxide and tin oxide, lithium titanate (Li₄Ti₅O₁₂), and metal lithium.

Examples of the conductive aid include carbon-based materials such as graphite and carbon black, metals such as copper, nickel, stainless steel, and iron, and conductive oxides such as indium tin oxide (ITO).

Examples of the binder include butadiene rubber (BR), acrylate butadiene rubber (ABR), styrene butadiene rubber (SBR), polyvinylidene difluoride (PVdF), and polytetrafluoroethylene (PTFE).

Examples of a material constituting the battery exterior body include nickel-plated iron, stainless steel, aluminum, alloys thereof, nickel, titanium, resin materials, and film materials.

Before the sulfide-based solid electrolyte-containing mixture is immersed in the organic solvent, it is preferable to carry out an operation of extracting an organic component from the sulfide-based solid electrolyte-containing mixture using an aprotic solvent. Among the above, the binder may coat particles of the sulfide-based solid electrolyte (A) in the sulfide-based solid electrolyte-containing mixture derived from the waste solid battery. Therefore, the organic component such as a binder may be another substance, but by extracting the organic component in advance from the sulfide-based solid electrolyte-containing mixture, the sulfide-based solid electrolyte (A) is more easily dissolved in the organic solvent, and the recycled product (B) can be efficiently recovered. An extraction method is not particularly limited, and examples thereof include a method in which the sulfide-based solid electrolyte-containing mixture is immersed in the aprotic solvent.

Since one that does not dissolve the sulfide-based solid electrolyte but dissolves the organic component such as a binder is preferable as the aprotic solvent, specifically, aprotic solvents such as hexane, heptane, octane, nonane, decane, toluene, and xylene are preferable.

### (Immersion Step)

The sulfide-based solid electrolyte-containing mixture described above is immersed in the organic solvent (immersion step). By immersing the sulfide-based solid electrolyte-containing mixture in the organic solvent, the solid-liquid mixture in which the sulfide-based solid electrolyte (A) is dissolved in the organic solvent while the other substance remains as the solid component in the organic solvent is obtained. A specific method of immersion is not particularly limited, and any known method may be used. In the immersion step, heating or stirring may be performed in order to facilitate dissolution of the sulfide-based solid electrolyte (A) as necessary.

From the viewpoint of relatively increasing solubility of the sulfide-based solid electrolyte and facilitating good solubility, the organic solvent preferably has a solubility parameter (SP value: unit (cal/cm³)^{0.5}) of 8 to 15, more preferably 10 to 15, and still more preferably 12 to 15.

Specific examples of the organic solvent preferably include one or more selected from the group consisting of methanol, ethanol, isopropyl alcohol, dipropylene glycol, ethyl acetate, chloroform, acetone, carbon disulfide, acetonitrile, dimethylformamide, 1,4-dioxane, N-methylformamide, tetrahydrofuran, and ethylenediamine. That is, the organic solvent may be a single component as described above, or a mixture containing one or more of the above components. From the viewpoints of excellent safety and ease of handling, it is more preferable that the organic solvent contains at least one of methanol and ethanol.

In the immersion step, the sulfide-based solid electrolyte (A) is preferably sufficiently dissolved in the organic solvent. Ease of dissolution varies depending on the type of the organic solvent and the type of the sulfide-based solid electrolyte (A), a state of the sulfide-based solid electrolyte-containing mixture, and the like, but for example, when the organic solvent contains methanol or ethanol, a mass ratio of (sulfide-based solid electrolyte (A)/organic solvent) is, for example, preferably 0.5 or less, more preferably 0.4 or less, and still more preferably 0.3 or less. On the other hand, when an amount of the solvent is too large, an amount of energy consumed in a deposition and drying step tends to increase, and thus the (sulfide-based solid electrolyte (A)/organic solvent) is preferably 0.05 or more, and more preferably 0.1 or more. The (sulfide-based solid electrolyte (A)/organic solvent) may be 0.05 to 0.5, 0.05 to 0.4, or 0.1 to 0.3.

### (Separation Step)

The solid-liquid mixture obtained in the immersion step is subjected to the solid-liquid separation (separation step). A specific method of the solid-liquid separation is not particularly limited, and examples thereof include filtration, centrifugal separation, and precipitation treatment. The solid-liquid mixture is separated into a solid component and a liquid fraction by the separation step. In the present production method, the separated solid component is no longer necessary for the production of the sulfide-based solid electrolyte, but may be recovered separately or may be subjected to a further step of recovering specific substances contained in the solid component.

### (Deposition and Drying Step)

The sulfide-based solid electrolyte is deposited from the liquid fraction obtained by the separation step, the organic solvent is evaporated, and the dried sulfide-based solid electrolyte recycled product (B) is obtained (deposition and drying step). A deposition and drying method is not particularly limited, but deposition and drying can be performed by a method such as heat drying, vacuum drying, or freeze drying. For example, in the case of heat drying, the organic solvent is evaporated by the heating, the sulfide-based solid electrolyte is deposited from the liquid fraction, and the remaining solvent is evaporated to obtain the dried sulfide-based solid electrolyte recycled product (B). Specific conditions for evaporating the organic solvent can be adjusted depending on the type of the organic solvent, and for example, in the case of heat drying, the conditions include heat drying at 80°C to 250°C for 0.5 hours to 8 hours. In order to efficiently evaporate the solvent, a pressure may be reduced as necessary during the heat drying. An atmosphere during the heat drying is preferably an inert gas atmosphere. Examples of the inert gas include a nitrogen gas, an argon gas, and a helium gas.

### (Heat Treatment Step)

The sulfide-based solid electrolyte recycled product (B) obtained by the deposition and drying step is subjected to a heat treatment at 340°C or higher (heat treatment step). It is considered that the recycled product (B) obtained by the deposition and drying step contains the sulfide-based solid electrolyte, but lithium ion conductivity is likely to be significantly inferior to that of the sulfide-based solid electrolyte (A), and it is difficult to directly reuse the recycled product (B) for applications such as an all-solid-state lithium-ion secondary battery. The present inventors have found that one of reasons why the lithium ion conductivity of the recycled product (B) is insufficient is that water in the organic solvent and the sulfide-based solid electrolyte form P₂O₅, and P₂O₅ is contained as an impurity in the recycled product (B). Further, by subjecting the recycled product (B) to a heat treatment at a melting point (330°C) or more of P₂O₅, P₂O₅ can be separated from the sulfide-based solid electrolyte by phase separation, and by setting a temperature to 340°C or higher, the separated P₂O₅ can be volatilized and removed by sublimation. Accordingly, the present inventors have found that lithium ion conductivity of the obtained sulfide-based solid electrolyte (C) can be improved, thereby completing the present invention.

The temperature of the heat treatment is 340°C or higher and more preferably 550°C or higher from the viewpoint of improving the lithium ion conductivity of the sulfide-based solid electrolyte (C). Further, in the heat treatment step, the temperature of the heat treatment is more preferably 600°C or higher, and particularly preferably 700°C or higher. When the temperature is 600°C or more, in the recycled product (B), the sulfide-based solid electrolyte component also melts, which makes it easier for the phase separation and the volatilization of P₂O₅ to proceed, and also has an effect of effectively separating LiHa (Ha represents a halogen element) formed when a P component is removed from the sulfide-based solid electrolyte due to the formation of P₂O₅, and thus the lithium ion conductivity of the sulfide-based solid electrolyte (C) can be further improved. The temperature of the heat treatment is preferably 900°C or lower, and more preferably 800°C or lower, from the viewpoint of preventing a composition deviation caused by volatilization of a sulfur component from the sulfide-based solid electrolyte during the heat treatment. The temperature of the heat treatment may be 340°C to 900°C, 550°C to 900°C, 600°C to 900°C, or 700°C to 800°C.

A time for the heat treatment (holding time at a predetermined temperature) is not particularly limited, but from the viewpoint of sufficiently promoting the phase separation, for example, 5 minutes or more is preferable, and 10 minutes or more is more preferable. On the other hand, the time for the heat treatment is preferably 60 minutes or less, and more preferably 30 minutes or less, from the viewpoint of improving productivity. The time for the heat treatment may be 5 minutes to 60 minutes or 10 minutes to 30 minutes.

A specific method of the heat treatment is not particularly limited, and examples thereof include a method in which the recycled product (B) is put in a heat-resistant container or the like and heated in a heating furnace. The heat-resistant container is not particularly limited, and examples thereof include a heat-resistant container made of carbon, a heat-resistant container containing an oxide such as silica, a silica glass, a borosilicate glass, an aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may have a bulk formed of the above-described material, or may be a container in which a layer of carbon, an oxide, a nitride, a carbide, or the like is formed. A shape of the heat-resistant container is not particularly limited, and may be any shape, such as a prismatic shape, a cylindrical shape, or a conical shape.

An atmosphere of the heat treatment is not particularly limited, but, for example, an atmosphere having a dew point of -70°C to -30°C and an oxygen concentration of 100 ppm by volume or less is preferable. Further, the atmosphere of the heat treatment is preferably an inert gas atmosphere or an atmosphere containing element sources used in a composition adjustment step to be described below is preferred.

Cooling after the heating can be performed by a known method.

According to such a heat treatment step, the sulfide-based solid electrolyte (C) is obtained as a sulfide-based solid electrolyte having excellent lithium ion conductivity.

The present production method may further include adding one or more selected from the group consisting of a sulfur source, a phosphorus source, a halogen source, and a lithium source (composition adjustment step) in addition to the above-described steps. Accordingly, for example, it is possible to supplement an elemental component that is insufficient for a target composition or an elemental component that is easily desorbed during the heat treatment step, thereby adjusting a composition of the sulfide-based solid electrolyte (C). Examples of a specific method of the composition adjustment step include a method in which a desired element source is added in an immersion step, the element source is dissolved in a liquid fraction of a solid-liquid mixture, and the element source is contained in the recycled product (B), a method in which a desired element source is added to a recycled product (B) and a heat treatment step is performed, and a method in which a desired element source is introduced into a heated product or a molten material in a step of a heat treatment step.

Each element source that can be used in the composition adjustment step is not particularly limited as long as the element source is a substance containing a chemical element or a compound containing the element, and may be in any state of solid, amorphous, liquid, or gas. As an example, a sulfur source includes phosphorus sulfides such as phosphorus trisulfide (P₂S₃) and phosphorus pentasulfide (P₂S₅), other sulfur compounds containing phosphorus, elemental sulfur, H₂S, CS₂, iron sulfides (FeS, Fe₂S₃, FeS₂, Fe₁₋ₓS, and the like), bismuth sulfide (Bi₂S₃), copper sulfides (CuS, Cu₂S, Cu₁₋ₓS, and the like) and the like.

Examples of the sulfur source include phosphorus sulfides such as phosphorus trisulfide (P₂S₃) and phosphorus pentasulfide (P₂S₅), phosphorus compounds such as sodium phosphate (Na₃PO₄), and elemental phosphorus.

Examples of the halogen source include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides.

Examples of the lithium source include lithium compounds such as lithium sulfide (Li₂S), lithium carbonate (Li₂CO₃), lithium sulfate (Li₂SO₄), lithium oxide (Li₂O), and lithium hydroxide (LiOH), and metal lithium.

These elements or compounds may be used alone or in combination of two or more kinds thereof.

An example of the case of adding the sulfur source in the composition adjustment step includes a heat treatment in a gas atmosphere containing a sulfur element. A sulfur component may be easily eliminated during the heat treatment, but by using such a method, it is possible to supplement the sulfur component or adjust a content of the sulfur component in the sulfide-based solid electrolyte (C). In this case, a sulfide-based solid electrolyte component in the recycled product (B) does not have to be molten, but if the sulfide-based solid electrolyte component is molten, it is more preferable because the sulfur component can be easily introduced homogeneously.

The gas containing the sulfur element is obtained by heating the sulfur source. Therefore, the sulfur source is not particularly limited as long as the sulfur source is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to the heating portion using an inert gas such as a N₂ gas, an argon gas, and a helium gas as a carrier gas to obtain the gas atmosphere containing the sulfur element.

The temperature at which the sulfur source is heated may be appropriately selected depending on the type of the used sulfur source. For example, when elemental sulfur is used as the sulfur source, the heating temperature is preferably 250°C or higher and 750°C or lower.

Alternatively, among the sulfur sources described above, solid sulfur sources such as elemental sulfur, H₂S, Bi₂S₃, iron sulfides, copper sulfides, and CS₂ may be pneumatically transported in a fine state such as powder to the heating portion by a carrier gas to obtain the gas atmosphere containing the sulfur element.

When heating and melting is performed in the gas atmosphere containing the sulfur element, a sulfur partial pressure is preferably set to 10⁻³ atm to 10⁰ atm. By setting such a sulfur partial pressure in this range, sulfur can be introduced efficiently at a low cost without complicating the apparatus.

According to the present production method, even when a sulfide-based solid electrolyte-containing mixture containing impurities and the like is used, a sulfide-based solid electrolyte having excellent lithium ion conductivity can be produced. The sulfide-based solid electrolyte (C) obtained by the present production method may have excellent lithium ion conductivity even in the case where a certain amount of carbon or oxygen is contained as an impurity. When a certain amount of carbon or oxygen is contained as an impurity, the following effects are expected, respectively, and thus the present production method may further include a step of adding a carbon source or an oxygen source.

That is, when the sulfide-based solid electrolyte (C) contains oxygen, it is possible to prevent generation of toxic H₂S upon contact with water. From such a viewpoint, a content of oxygen in the sulfide-based solid electrolyte (C) is preferably 1 mass% or more, more preferably 3 mass% or more, and still more preferably 5 mass% or more. On the other hand, from the viewpoint of lithium ion conductivity, the content of oxygen is preferably 20 mass% or less, more preferably 15 mass% or less, and still more preferably 10 mass% or less. The content of oxygen may be 1 mass% to 20 mass%, 3 mass% to 15 mass%, or 5 mass% to 10 mass%. Here, oxygen means an oxygen atom present in a sulfide-based solid electrolyte, and a content thereof can be measured using an oxygen/nitrogen/hydrogen analyzer ONH836 manufactured by LECO JAPAN CORPORATION.

When the sulfide-based solid electrolyte (C) contains carbon, then the sulfide-based solid electrolyte (C) is used as a negative electrode material in a negative electrode layer of an all-solid-state battery, characteristics of the battery can be improved. From such a viewpoint, a content of carbon in the sulfide-based solid electrolyte (C) is preferably 0.01 mass% or more, more preferably 0.1 mass% or more, and still more preferably 0.2 mass% or more. On the other hand, from the viewpoint of ensuring the lithium ion conductivity, a content of carbon is preferably 3 mass% or less, more preferably 2 mass% or less, and still more preferably 1 mass% or less. The content of carbon may be 0.01 mass% to 3 mass%, 0.1 mass% to 2 mass%, or 0.2 mass% to 1 mass%. Here, carbon means a carbon atom present in a sulfide-based solid electrolyte, and a content thereof can be measured by a sulfur carbon analyzer CS744 manufactured by LECO JAPAN CORPORATION.

A shape of the sulfide-based solid electrolyte (C) obtained by the present production method is not particularly limited, and taking into consideration the case where melting occurs during the heat treatment, the shape may be, for example, a powder form, a plate form, a block form, a flake form, a fiber form, or the like. The shape of the sulfide-based solid electrolyte is preferably a powder form from the viewpoint of improving adhesion to active material particles and the like when the sulfide-based solid electrolyte is used in the lithium-ion secondary battery and improving battery characteristics. Therefore, the present production method may include a pulverization step of adjusting the sulfide-based solid electrolyte (C) to a desired shape or a particle diameter.

An average particle diameter of the powder is not particularly limited, but for example, from the viewpoint of improving the battery characteristics when the sulfide-based solid electrolyte is used for the lithium-ion secondary battery, the average particle diameter is preferably 5 µm or less, more preferably 2 µm or less, still more preferably 1.5 µm or less, and yet still more preferably 1.0 µm or less. On the other hand, from the viewpoint of ease of handling the powder, the average particle diameter is preferably 0.1 µm or more, more preferably 0.2 µm or more, and still more preferably 0.3 µm or more. The average particle diameter of the powder may be 0.1 µm to 5 µm, 0.2 µm to 2 µm, 0.3 µm to 1.5 µm, or 0.3 µm to 1.0 µm. In the present specification, the average particle diameter refers to a median diameter (D50) determined from a chart of a volume-based particle size distribution obtained by measuring a particle size distribution using a laser diffraction particle size distribution analyzer MT 3300 EXII manufactured by Microtrac.

The lithium ion conductivity of the sulfide-based solid electrolyte (C) is not particularly limited since the lithium ion conductivity varies depending on a composition thereof, but from the viewpoint of improving the battery characteristics when the present invention is used for the lithium-ion secondary battery, the lithium-ion conductivity is preferably 1.0 × 10⁻³ S/cm or more, more preferably 2.0 × 10⁻³ S/cm, still more preferably 3.0 × 10⁻³ S/cm, and yet still more preferably 4.0 × 10⁻³ S/cm at 25°C. Particularly preferably, when the sulfide-based solid electrolyte to be measured is made into a powder having an average particle diameter of 1.0 µm and compressed under a pressure of 380 MPa to form a powder compact, the lithium ion conductivity measured at 25°C is in the above-mentioned range.

The present production method may further include, after the heat treatment step, a step of performing a heat treatment again for the purpose of stabilizing a crystal structure contained in the sulfide-based solid electrolyte (C) and further improving the lithium ion conductivity.

In the present production method, the sulfide-based solid electrolyte-containing mixture derived from a waste solid battery or the like is used as a raw material, and the obtained sulfide-based solid electrolyte has excellent lithium ion conductivity. Therefore, the present production method is suitable for reusing the sulfide-based solid electrolyte.

### EXAMPLES

Hereinafter, the present invention is specifically described with reference to Examples, but the present invention is not limited thereto. Example 1 is a working example.

### (Example 1)

A sulfide-based solid electrolyte-containing mixture including a sulfide-based solid electrolyte (A) having a composition of Li_{5.4}PS_{4.4}Cl_{0.8}Br_{0.8} and containing an argyrodite crystal, and a piece of stainless steel (SUS) as another substance, was immersed in ethanol. Accordingly, a solid-liquid mixture was obtained in which the sulfide-based solid electrolyte (A) was dissolved in ethanol while having the piece of stainless steel (SUS) remaining as a solid component. During the immersion, the sulfide-based solid electrolyte (A) was dissolved by stirring the solid-liquid mixture at room temperature for 30 minutes. Amounts of the sulfide-based solid electrolyte (A) and an organic solvent were adjusted such that a mass ratio of (sulfide-based solid electrolyte (A)/organic solvent) was 0.1.

The solid component and a liquid fraction were separated by directly recovering the piece of stainless steel from the obtained solid-liquid mixture. The obtained liquid fraction was heated to 120°C and heated under a reduced pressure for 2 hours while flowing a nitrogen gas to evaporate the organic solvent, thereby obtaining a dried sulfide-based solid electrolyte recycled product (B). In order to adjust a content of a sulfur component, powdered sulfur was added to the obtained recycled product (B), which was then heat-treated at 750°C for 15 minutes in a heat-resistant container and cooled to obtain a sulfide-based solid electrolyte (C).

### (Evaluation)

### (XRD Measurement)

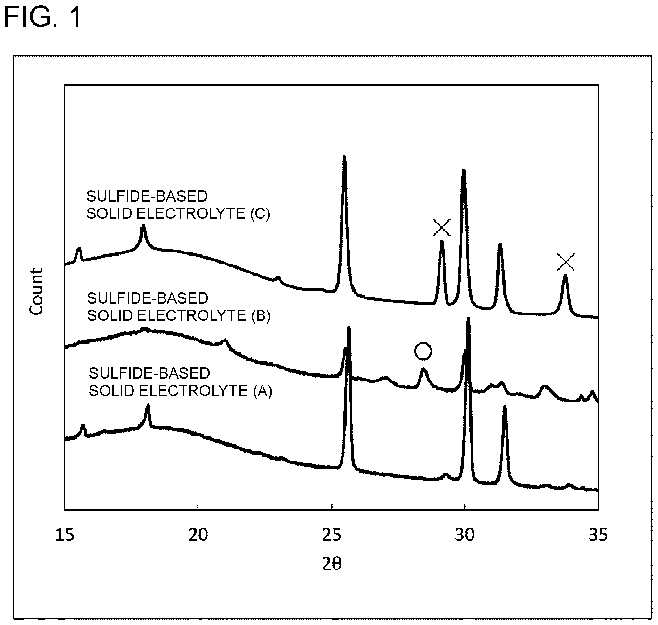

The sulfide-based solid electrolyte (A), the sulfide-based solid electrolyte recycled product (B), and the sulfide-based solid electrolyte (C) were subjected to XRD measurement under the following conditions. Results are shown in FIG. 1.

From FIG. 1, in an XRD spectrum of the recycled product (B), a peak derived from P₂O₅ was observed at a position in the vicinity of 2θ = 28.5° indicated by circle. On the other hand, in the sulfide-based solid electrolyte (A) and the sulfide-based solid electrolyte (C), a peak derived from P₂O₅ was not observed. Further, peaks derived from LiHa were observed at positions in the vicinity of 2θ = 29.2° and 33.8° indicated by x in the sulfide-based solid electrolyte (C). On the other hand, a peak derived from LiHa was not observed in the sulfide-based solid electrolyte (A) and the sulfide-based solid electrolyte recycled product (B). From this, it can be found that P₂O₅ is formed in the recycled product (B) due to a reaction between a trace amount of water present in ethanol as a solvent and the sulfide-based solid electrolyte, and thereafter, P₂O₅ is devolatilized by the heat treatment step, and LiHa is deposited by phase separation.

### (Oxygen Content and Carbon Content Evaluation)

An oxygen content in the sulfide-based solid electrolyte (C) was measured by an oxygen/nitrogen/hydrogen analyzer model number ONH836 manufactured by LECO JAPAN CORPORATION. Further, a carbon content in the sulfide-based solid electrolyte (C) was measured by a sulfur carbon analyzer model number CS744 manufactured by LECO JAPAN CORPORATION. As a result, the oxygen content in the sulfide-based solid electrolyte (C) was 8 mass%, and the carbon content was 0.64 mass%.

### (Lithium ion Conductivity Evaluation)

Lithium ion conductivity of each of the sulfide-based solid electrolyte (A), the sulfide-based solid electrolyte recycled product (B), and the sulfide-based solid electrolyte (C) was evaluated. Each sulfide-based solid electrolyte was pulverized to obtain a sulfide-based solid electrolyte powder. The sulfide-based solid electrolyte powder was compressed under a pressure of 380 MPa to form a powder compact to be used as a measurement sample, and measured by using an AC impedance measuring device (potentiostat/galvanostat VSP, manufactured by Bio-Logic Sciences Instruments).

The measurement conditions were as follows: a measurement frequency of 100 Hz to 1 MHz, a measurement voltage of 100 mV, and a measurement temperature of 25°C.

Measurement results are shown in FIG. 2. The lithium ion conductivity was 8.6 × 10⁻³ S/cm in the sulfide-based solid electrolyte (A), 8.0 × 10⁻⁶ S/cm in the sulfide-based solid electrolyte recycled product (B), and 3.0 × 10⁻³ S/cm in the sulfide-based solid electrolyte (C).

As a result, the lithium ion conductivity of the sulfide-based solid electrolyte recycled product (B) is significantly lower than the lithium ion conductivity of the sulfide-based solid electrolyte (A) and is not sufficient for use as a material for a lithium-ion secondary battery. On the other hand, the lithium ion conductivity of the sulfide-based solid electrolyte (C) is 1.0 × 10⁻³ S/cm or more, which is slightly lower than that of the sulfide-based solid electrolyte (A), but is generally equivalent and excellent. That is, according to the present production method, it is found that the sulfide-based solid electrolyte (A) is reused to obtain the sulfide-based solid electrolyte (C) having excellent lithium ion conductivity.

As described above, the followings are disclosed in the present description.
1. A method for producing a sulfide-based solid electrolyte including obtaining a sulfide-based solid electrolyte recycled product (B) from a liquid in which a sulfide-based solid electrolyte (A) in a sulfide-based solid electrolyte-containing mixture is dissolved in an organic solvent,
   in which the sulfide-based solid electrolyte-containing mixture contains the sulfide-based solid electrolyte (A) and another substance insoluble in the organic solvent, and
   the method includes: obtaining a solid-liquid mixture by immersing the sulfide-based solid electrolyte-containing mixture in the organic solvent to dissolve the sulfide-based solid electrolyte (A) in the organic solvent while having the other substance remaining as a solid component in the organic solvent; obtaining the dried sulfide-based solid electrolyte recycled product (B) by subjecting the solid-liquid mixture to solid-liquid separation, causing a sulfide-based solid electrolyte to be deposited out from an obtained liquid fraction, and vaporizing the organic solvent; and subjecting the recycled product (B) to a heat treatment at 340°C or higher.
2. The method for producing a sulfide-based solid electrolyte according to the 1, in which in the heat treatment, the recycled product (B) is heat-treated at 600°C or higher.
3. The method for producing a sulfide-based solid electrolyte according to the 1 or 2, further including adding one or more selected from the group consisting of a sulfur source, a phosphorus source, a halogen source, and a lithium source.
4. The method for producing a sulfide-based solid electrolyte according to any one of the 1 to 3, in which the heat treatment is performed in a gas atmosphere containing a sulfur element.
5. The method for producing a sulfide-based solid electrolyte according to any one of the 1 to 4, in which the organic solvent includes one or more selected from the group consisting of methanol, ethanol, isopropyl alcohol, dipropylene glycol, ethyl acetate, chloroform, acetone, carbon disulfide, acetonitrile, dimethylformamide, 1,4-dioxane, N-methylformamide, tetrahydrofuran, and ethylenediamine.
6. The method for producing a sulfide-based solid electrolyte according to any one of the 1 to 5, in which the sulfide-based solid electrolyte-containing mixture contains a substance extracted from an all-solid-state battery.
7. The method for producing a sulfide-based solid electrolyte according to any one of the 1 to 6, in which the sulfide-based solid electrolyte-containing mixture contains a substance obtained by pulverizing an all-solid-state battery.
8. The method for producing a sulfide-based solid electrolyte according to any one of the 1 to 7, further including performing an operation of extracting an organic component from the sulfide-based solid electrolyte-containing mixture using an aprotic solvent before the immersion.
9. The method for producing a sulfide-based solid electrolyte according to any one of the 1 to 8, in which the obtained sulfide-based solid electrolyte has an oxygen content of 1 mass% or more, or a carbon content of 0.01 mass% or more.

Although the present invention has been described in detail with reference to specific embodiments, it is apparent to those skilled in the art that various changes and modifications can be made without departing from the spirit and scope of the present invention. The present application is based on a Japanese Patent Application (No. 2022-012075) filed on January 28, 2022, the contents of which are incorporated herein by reference.

## Claims

1. A method for producing a sulfide-based solid electrolyte, comprising obtaining a sulfide-based solid electrolyte recycled product (B) from a liquid in which a sulfide-based solid electrolyte (A) in a sulfide-based solid electrolyte-containing mixture is dissolved in an organic solvent,
wherein the sulfide-based solid electrolyte-containing mixture comprises the sulfide-based solid electrolyte (A) and another substance insoluble in the organic solvent, and
the method comprises:
obtaining a solid-liquid mixture by immersing the sulfide-based solid electrolyte-containing mixture in the organic solvent to dissolve the sulfide-based solid electrolyte (A) in the organic solvent while having the other substance remaining as a solid component in the organic solvent;
obtaining the dried sulfide-based solid electrolyte recycled product (B) by subjecting the solid-liquid mixture to solid-liquid separation, causing a sulfide-based solid electrolyte to be deposited out from an obtained liquid fraction, and vaporizing the organic solvent; and
subjecting the recycled product (B) to a heat treatment at 340°C or higher.

2. The method for producing a sulfide-based solid electrolyte according to claim 1,
wherein in the heat treatment, the recycled product (B) is heat-treated at 600°C or higher.

3. The method for producing a sulfide-based solid electrolyte according to claim 1 or 2, further comprising adding one or more selected from the group consisting of a sulfur source, a phosphorus source, a halogen source, and a lithium source.

4. The method for producing a sulfide-based solid electrolyte according to claim 1 or 2,
wherein the heat treatment is performed in a gas atmosphere containing a sulfur element.

5. The method for producing a sulfide-based solid electrolyte according to claim 1 or 2,
wherein the organic solvent comprises one or more selected from the group consisting of methanol, ethanol, isopropyl alcohol, dipropylene glycol, ethyl acetate, chloroform, acetone, carbon disulfide, acetonitrile, dimethylformamide, 1,4-dioxane, N-methylformamide, tetrahydrofuran, and ethylenediamine.

6. The method for producing a sulfide-based solid electrolyte according to claim 1 or 2,
wherein the sulfide-based solid electrolyte-containing mixture comprises a substance extracted from an all-solid-state battery.

7. The method for producing a sulfide-based solid electrolyte according to claim 1 or 2,
wherein the sulfide-based solid electrolyte-containing mixture comprises a substance obtained by pulverizing an all-solid-state battery.

8. The method for producing a sulfide-based solid electrolyte according to claim 1 or 2, comprising performing an operation of extracting an organic component from the sulfide-based solid electrolyte-containing mixture using an aprotic solvent before the immersion.

9. The method for producing a sulfide-based solid electrolyte according to claim 1 or 2,
wherein the obtained sulfide-based solid electrolyte has an oxygen content of 1 mass% or more, or a carbon content of 0.01 mass% or more.
